# EUROPÄISCHE PATENTSCHRIFT

(11) **EP 3 174 132 B1**
(45) Veröffentlichungstag und Bekanntmachung des Hinweises auf die Patenterteilung: **25.07.2018**
(21) Anmeldenummer: 15197054.8
(22) Anmeldetag: 30.11.2015
(51) Int. Cl.: H01M 2/10, H01M 10/6562, B60L 11/18, B60L 3/00, B60L 3/12

(54) **TRAKTIONSBATTERIE**
TRACTION BATTERY
BATTERIE DE PROPULSION

(43) Veröffentlichungstag der Anmeldung: 31.05.2017
(73) Patentinhaber: HOPPECKE Batterien GmbH & Co. KG., 59929 Brilon (DE)
(72) Erfinder: KESPER, Heinrich, 34508 Willingen (DE)
(74) Vertreter: Rausch Wanischeck-Bergmann Brinkmann

(56) Entgegenhaltungen:
- DE-A1-102013 218 038
- US-A- 5 441 123
- US-A1- 2012 175 177
- US-A1- 2014 333 239

## Beschreibung

Die Erfindung betrifft eine Traktionsbatterie für Hochstromanwendungen, insbesondere in Flurförderzeugen oder Radladern. Darüber hinaus betrifft die Erfindung ein System bestehend aus einem Fahrzeug und einer Traktionsbatterie sowie ferner die Verwendung einer Traktionsbatterie als Hochstrombatterie. Aus dem Stand der Technik sind Traktionsbatterien an sich gut bekannt, siehe zum die Offenbarungen der Druckschriften US 5 441 123 A, US 2014/333239 A1, US 2012/175177 A1 oder DE 10 2013 218038 A1. Als nicht stationäre Batterien finden Traktionsbatterien typischerweise in der Fahrzeugtechnik Verwendung, beispielsweise bei Flurförderzeugen, Radladern und/oder dergleichen. Vorbekannte Traktionsbatterien verfügen über eine Mehrzahl von miteinander elektrisch verschalteten Batterienzellen. Dabei verfügt jede Batteriezelle über ein Zellengehäuse, das einerseits einen flüssigen Elektrolyten sowie andererseits eine abwechselnd angeordnete positive und negative Elektrodenplatte aufnimmt. Das Zellengehäuse ist dabei oberseitig mittels eines Deckels elektrolytdicht verschlossen.

Die Batteriezellen können hinsichtlich ihrer geometrischen Abmessungen und/oder der Anzahl der Elektrodenplatten in Entsprechung des späteren Verwendungszwecks ausgebildet sein. Dabei steigt mit der Baugröße die von einer Batteriezelle bereitgestellte Kapazität.

Aufgrund aktueller Entwicklungen besteht ein industrielles Interesse daran, auch für Hochstromanwendungen geeignete Traktionsbatterien bereitzustellen. Dabei besteht ein grundlegendes Problem darin, dass die Aufnahme und/oder die Abgabe hoher Ströme mit zunehmender Größe der einzelnen Batteriezelle zu stärker ins Gewicht fallenden unerwünschten Nebeneffekten führt, wie zum Beispiel der Wärmeentwickung aufgrund des mit steigender Zellengröße anwachsenden Innenwiderstands.

In nachteiliger Weise führt dies im Verwendungsfall zu einer verkürzten Lebensdauer sowie zu kürzeren Entladezyklen. Damit sind aus dem Stand der Technik vorbekannte Traktionsbatterien ab einer bestimmten Baugröße für Hochstromanwendungen nicht oder nur bedingt geeignet, was insbesondere für Traktionsbatterien der Baugrößen gilt, die im Markt wegen der gewünschten hohen Kapazität gefordert werden.

Es stehen somit die einander widerstreitenden Anforderungen gegenüber, eine Batterie zu schaffen, die bei gleichzeitiger Langlebigkeit entweder eine hohe Kapazität bereitstellt oder für Hochstromanwendungen geeignet ist. Gattungsgemäße Batterien werden dieser Anforderung nicht gerecht.

Es ist daher die **Aufgabe** der Erfindung, eine Traktionsbatterie bereitzustellen, die sowohl eine hohe Kapazität erreicht, als auch für Hochstromanwendungen geeignet ist.

Zur **Lösung** dieser Aufgabe wird mit der Erfindung eine Traktionsbatterie der eingangs genannten Art vorgeschlagen, mit mehreren miteinander verschalteten Batteriezellen und einem Batterietrog zur Aufnahme der Batteriezellen, wobei die Batteriezellen einen Elektrolyten aufweisen, wobei der Elektrolyt in gelartiger und/oder gebundener Form bereitgestellt ist, und wobei der Batterietrog von der Rechteckform abweichend ausgebildet ist, wobei der Batterietrog modular aufgebaut ist, und wobei die Module zur Ausbildung des Batterietrogs in Höhenrichtung übereinander und nebeneinander anordbar und miteinander verbindbar ausgebildet sind. Eine in erfindungsgemäßer Weise ausgebildete Traktionsbatterie ist in vorteilhafter Weise für Hochstromanwendungen geeignet. "Hochstromanwendungen" im Sinne der Erfindung meint dabei Anwendungen, bei denen hohe Ströme innerhalb kurzer Zeitspannen von der Batterie aufgenommen und/oder abgegeben werden, sei es im Entladefall durch die Stromversorgung von zum Beispiel Drehstrommotoren oder im Beladefall durch den Einsatz von zum Beispiel modernen Lademanagementsystemen und/oder Energierückgewinnungseinrichtungen (Rekuperation). Insbesondere sind Hochstromanwendungen solche, bei denen eine Entladung mit einem Stromwert erfolgt, der wenigstens 80% des der Nennkapazität der Batterie gleichgesetzten Stromwertes entspricht. Beträgt also die Nennkapazität einer Batterie beispielsweise 100 A/h, so ergibt sich ein dieser Nennkapazität gleichgesetzter Stromwert von 100 A. Demnach liegt im Sinne der Erfindung eine Hochstromanwendung dann vor, wenn eine Batteriebeladung oder -entladung von wenigstens 80 A stattfindet.

Gelartig im Sinne der Erfindung bezeichnet hierbei einen Elektrolyten, der nicht in klassisch flüssiger Form die Elektroden einer Batteriezelle umspült, sondern einen Elektrolyten, der als Gel ausgebildet ist. Es ist in diesem Zusammenhang bevorzugt, die Batterienzellen als Blei-Säurezeilen auszubilden. Zur Herstellung des gelartigen Elektrolyten kann der Elektrolyt in flüssiger Form zunächst in die Batteriezelle eingefüllt und anschließend insbesondere mit Kieselsäure versetzt. Alternativ können der Elektrolyt und die Kieselsäure auch vor einer Einfüllung in die Batteriezelle mit einander vermischt werden. Die Verwendung von Gel macht den Einsatz von Röhrchenplatten möglich. Alternativ oder in Kombination zur gelartigen Ausgestaltung des Elektrolyten kann dieser erfindungsgemäß auch in gebundener Form in der Batteriezelle vorliegen. Es ist in diesem Zusammenhang bevorzugt, den Elektrolyten vliesgebunden bereitzustellen. Dabei verfügt die Batteriezelle über Vliesseparatoren, welche zwischen Elektrodenplatten unterschiedlicher Polung angeordnet sind. In den Vliesseparatoren liegt der Elektrolyt in der Batteriezelle in gebundener Form vor, so dass ein Austreten des Elektrolyten aus dem Vlies nicht möglich ist. Die Vliesseparatoren sind dabei vorzugsweise aus Glasfasern gebildet. Es ist in diesem Zusammenhang ferner bevorzugt, die Elektrodenplatten im Falle der Verwendung von Vliesseparatoren in Form von Gitterplatten auszubilden. Hierdurch lässt sich die Kontaktfläche zwischen Elektrode und Vlies in vorteilhafter Weise verbessern.

Durch die erfindungsgemäße Kombination aus Batteriezellen ohne flüssigem Elektrolyt sowie dem von der Rechteckform abweichenden Batterietrog lässt sich vorteilhafterweise eine Traktionsbatterie bereitstellen, die einerseits eine hohe Kapazität aufweist und andererseits für Hochstromanwendungen geeignet ist. Die Batteriezellen müssen im Gegensatz zu den aus dem Stand der Technik bekannten Batteriezellen mit flüssigem Elektrolyt nicht aufrecht stehen. Vielmehr können sie in beliebiger Weise ausgerichtet werden, ohne dass die Gefahr besteht, dass der Elektrolyt ausläuft. In Kombination mit dem von der Rechteckform abweichenden Batterietrog ergibt sich der synergetische Effekt, dass die erfindungsgemäßen Batteriezellen mit geringerer Bauhöhe gebaut werden können, so dass die Wärmeentwicklung bei Hochstromanwendungen im Vergleich zu aus dem Stand der Technik bekannten Batteriezellen reduziert ist. Darüber hinaus können gleiche bzw. höhere Kapazitäten dadurch erreicht werden, dass die Batteriezellen in beliebiger räumlicher Ausrichtung im von der Rechteckform abweichenden Batterietrog anordenbar sind. Hierdurch lassen sich Raumverhältnisse bedeutend besser ausnutzen, so dass im Vergleich zum Stand der Technik einerseits mehr Batteriezellen im erfindungsgemäßen Batterietrog untergebracht werden können. Andererseits ist es darüber hinaus möglich, den Batterietrog an vorgebbare Raumverhältnisse anzupassen, so dass der Batterietrog im Vergleich zum Stand der Technik eine größere Aufnahme bereitstellt. Es ist in diesem Zusammenhang ferner möglich, Batteriezellen unterschiedlicher Bauhöhe im erfindungsgemäßen Batterietrog anzuordnen. Dies ermöglicht eine weiter verbesserte Raumausnutzung, die mit einer vorteilhaften Erhöhung der Gesamtkapazität der Traktionsbatterie einhergeht.

Batteriezellen mit gelartigem oder in einem Vlies gebundenem Elektrolyten sind aus dem Stand der Technik an sich, zum Beispiel in Form sogenannter AGM-Batteriezellen bekannt. Diese werden allerdings aufgrund ihrer vergleichsweise kleinen Kapazität nicht als Traktionsbatterien verwendet. Die mit einer solchen Ausgestaltung verbundenen Vorteile mit Bezug auf Traktionsbatterien für Hochstromanwendungen sind im Stand der Technik aufgrund der offensichtlichen Nachteile, die solche Batterietypen als Verwendung für Traktionsbatterien mit sich bringen, bislang nicht erkannt worden.

Erfindungsgemäß können die Batteriezellen im Batterietrog in beliebiger Raumrichtung ausgerichtet sein. Dies erlaubt zum einen eine verbesserte Ausnutzung der räumlichen Gegebenheiten, bietet aber auch weitere Vorteile. Im Stand der Technik ist es aufgrund des Erfordernisses, dass die Batteriezellen ausschließlich stehend, d.h. mit den Batterieanschlüssen in Höhenrichtung nach oben weisend im Batterietrog angeordnet sein müssen, erforderlich, dass ein von einem Fahrzeug bereitgestellter Aufnahmeraum eine in Höhenrichtung oberseitige Öffnung bereitstellt. Durch diese Öffnung wird die aus dem Stand der Technik bekannte Traktionsbatterie einerseits in den Aufnahmeraum eingebracht und bietet anschließend einen Zugang zu den Anschlüssen der Batteriezellen. Durch die erfindungsgemäße Ausgestaltung ist dies nun nicht länger notwendig. Vielmehr gestattet die erfindungsgemäße Ausgestaltung nunmehr auch, dass die Batteriezellen liegend angeordnet werden. Liegend bedeutet in diesem Zusammenhang, dass die Batterie in Höhenrichtung derart ausgerichtet ist, dass ihre Batterieanschlüsse zur Seite weisen. Dies erlaubt zum einen eine Reduzierung der Bauhöhe des betreffenden Fahrzeugs und gestattet weiterhin die Vorsehung einer in Höhenrichtung seitlich angeordneten Zugangsöffnung des Aufnahmeraums. Hierdurch kann auf eine konstruktiv vergleichsweise aufwendige Bereitstellung einer oberseitigen Öffnung verzichtet werden. Die vorzugsweise seitlich angeordnete Zugangsöffnung kann in konstruktiv einfacher Weise durch z.B. die Bereitstellung einer Heckklappe abgedeckt werden.

Gemäß einem Merkmal der Erfindung ist der Batterietrog modular aufgebaut. Jedes Modul kann hierbei eine oder mehrere Batteriezellen aufnehmen. Die Module sind in allen drei Raumrichtungen beliebig miteinander verbindbar ausgebildet. Der Batterietrog lässt sich somit in Abhängigkeit des zur Verfügung stehenden Aufnahmeraumes in jeder gewünschten Weise zusammensetzen. Die Module sind hierbei derart ausgebildet, dass die Batterien stehend und/oder liegend in ihnen angeordnet sein können. Vorzugsweise ist der Batterietrog aus Modulen mit gleicher Ausrichtung der Batteriezellen und/oder mit Modulen unterschiedlicher Ausrichtung der Batteriezellen aufbaubar.

Die Module sind vorzugsweise hinsichtlich ihrer geometrischen Ausgestaltung in Entsprechung der geometrischen Ausgestaltung der Batteriezellen ausgebildet. Üblicherweise sind die Module dabei quaderförmig ausgebildet. Es ist dabei möglich, Module unterschiedlicher Länge, Breite und/oder Höhe miteinander beim Aufbau des Batterietroges zu kombinieren. Hierdurch wird es insbesondere möglich, einen Batterietrog mit Batterien unterschiedlicher Bauhöhe, -breite und/oder -tiefe auszustatten.

Gemäß einem bevorzugten Merkmal der Erfindung ist der Batterietrog zweiseitig offen ausgebildet. Diese Ausgestaltung ermöglicht es, dass die vom Batterietrog im bestimmungsgemäßen Anwendungsfall aufgenommenen Batteriezellen zwecks Abkühlung von außen luftumströmt werden können, indem die Außenluft über die eine offene Seite des Batterietroges in den Batterietrog hineinströmen und über die andere offene Seite des Batterietrogs aus dem Batterietrog wieder herausströmen kann. Infolge der zweiseitig offenen Ausgestaltung des Batterietrogs wird mithin die Möglichkeit einer Luftzirkulation geschaffen, die im bestimmungsgemäßen Verwendungsfall dazu dient, eine schnellere Abkühlung der Batteriezellen zu bewirken.

Gemäß einer bevorzugten Ausgestaltung der Erfindung sind die Batteriezellen im Batterietrog, vorzugsweise mittels entsprechender Module, in Spalten und Reihen angeordnet. Eine Reihe im Sinne der Erfindung bezeichnet dabei eine in Höhenrichtung seitliche Nebeneinanderordnung von Batteriezellen. Eine Spalte im Sinne der Erfindung bezeichnet demgegenüber eine in Höhenrichtung Übereinanderordnung von Batteriezellen. Zur Optimierung des Platzbedarfs können Spalten und Reihen mit unterschiedlicher Länge bzw. unterschiedlicher Höhe ausgebildet sein. Zur Verbesserung der Wärmeabfuhr ist es vorzugsweise vorgesehen, dass benachbarte Reihen unter Belassung eines Spaltraumes beabstandet zueinander angeordnet sind. Damit sind zumindest zwei Seiten einer Nachbarzellen aufweisenden Batteriezelle luftumspült. Vorzugsweise sind die innerhalb einer Spalte benachbarten Batteriezellen ebenfalls unter Belassung eines Spaltraumes beabstandet zueinander angeordnet. In diesem Fall sind alle vier Seiten einer Nachbarzelle aufweisenden Batteriezelle luftumspült. Dies führt zu einer weiteren Verbesserung der Wärmeabfuhr der Hochstrombatterie. Innerhalb der Spalträume zwischen den Batteriezellen benachbarter Reihen wirkt im Anwendungsfall der Kamineffekt. Infolge der Zellenaufheizung erwärmt sich auch die Umgebungsluft zur Batteriezelle, die alsdann aufströmt und nach oben aus dem vorzugsweise oben offenen Batterietrog entweicht. Kühle Luft kann alsdann in die Spalträume nachströmen.

Gemäß einem weiteren Merkmal der Erfindung ist vorgesehen, dass der Batterietrog mit einer Be- und/oder Entlüftungseinrichtung ausgerüstet ist. Bei derlei Einrichtungen kann es sich beispielsweise um Lüfter handeln, die für eine ergänzende Luftzirkulation sorgen, womit die erwünschte Abkühlung der Batteriezellen noch weiter verbessert wird.

Zur **Lösung** der erfindungsgemäßen Aufgabe wird ferner ein System bestehend aus einem Fahrzeug und einer erfindungsgemäßen Traktionsbatterie vorgeschlagen, wobei das Fahrzeug einen von der Rechteckform abweichenden Aufnahmeraum zur Aufnahme der Traktionsbatterie bereitstellt, wobei der Batterietrog in seiner geometrischen Ausgestaltung in Abhängigkeit der geometrischen Ausgestaltung des Aufnahmeraums ausgebildet ist.

Die erfindungsgemäße Ausgestaltung gestattet eine im Vergleich zum Stand der Technik erhöhte Anzahl von im Aufnahmeraum anordbaren Batteriezellen, was im Ergebnis zu einer erhöhten Batteriekapazität beiträgt.

Gemäß einem bevorzugten Merkmal der Erfindung ist der Aufnahmeraum im Heckbereich des Fahrzeugs angeordnet und stellt eine in Höhenrichtung rückwärtig angeordnete Zugangsöffnung bereit. Diese ist mit einer Heckklappe verschlossen, die in Höhenrichtung nach oben, zur Seite und/oder nach unten hin geöffnet werden kann. Hierdurch wird eine optimale Zugänglichkeit der Hochstrombatterie gewährleistet. In diesem Fall ist es bevorzugt, die Batteriezellen im Batterietrog in Höhenrichtung liegend anzuordnen. Die Batterieanschlüsse weisen dabei in Richtung der Zugangsöffnung. Dies erleichtert einerseits die Verschaltung der Batteriezellen untereinander und gestattet darüber hinaus eine vergleichsweise einfache Wartung und Einbau der Hochstrombatterie.

Die erfindungsgemäße Traktionsbatterie eignet sich insbesondere zur Verwendung in Fahrzeugen und besonders bevorzugt in Flurförderzeugen, wie insbesondere Gabelstaplern, oder Radladern. Sie kann dabei Verwendung finden als Energiequelle für einen Antrieb der Arbeitshydraulik. Ferner kann sie als Energiequelle für den Fahrantrieb der vorgenannten Fahrzeuge verwendet werden. Im Falle ihrer Verwendung in Flurförderzeugen und Radladern ist die Traktionsbatterie vorzugsweise als Blei-Säure-Akkumulator ausgebildet, bei dem der Elektrolyt in Vliesseparatoren gebunden ist. Die Vliesseparatoren sind in diesem Fall aus einem Glasfaservlies oder einem Kohlefaservlies ausgebildet. Batterien auf Blei-Säure-Basis weisen ein vergleichsweise hohes Gewicht auf. Während dies mit Hinblick auf normale Fahrzeuge, wie insbesondere Personenkraftwagen von Nachteil ist, ist diese Eigenschaft insbesondere für Gabelstapler und Radlader von Vorteil, da die Traktionsbatterie, insbesondere bei Anordnung im Heckbereich, ein zusätzliches Gegengewicht zu den bestimmungsgemäß zu transportierenden Objekten bildet. Hierdurch kann auf die Anordnung zusätzlicher Gegengewichte im Fahrzeug in vorteilhafter Weise verzichtet werden bzw. deren Anzahl reduziert werden.

Die vorgenannten Merkmale erbringen für sich genommen und in Kombination miteinander den synergetischen Effekt eine Traktionsbatterie mit vliesgebundenem Elektrolyten für Hochstromanwendungen nutzbar zu machen und hierdurch die Raumausnutzung der erfindungsgemäßen Hochstrombatterie zu verbessern.

Die Erfindung wird nachfolgend anhand einer bevorzugten Ausführungsform der Erfindung näher erläutert. Dabei zeigt:
- Fig. 1:: einen Batterietrog gemäß der Erfindung in perspektivischer Frontansicht;
- Fig. 2:: Batterietrog gemäß Fig. 1 in perspektivischer rückwärtiger Ansicht; und
- Fig. 3:: Batterietrog gemäß Fig. 1 mit Verkleidung.

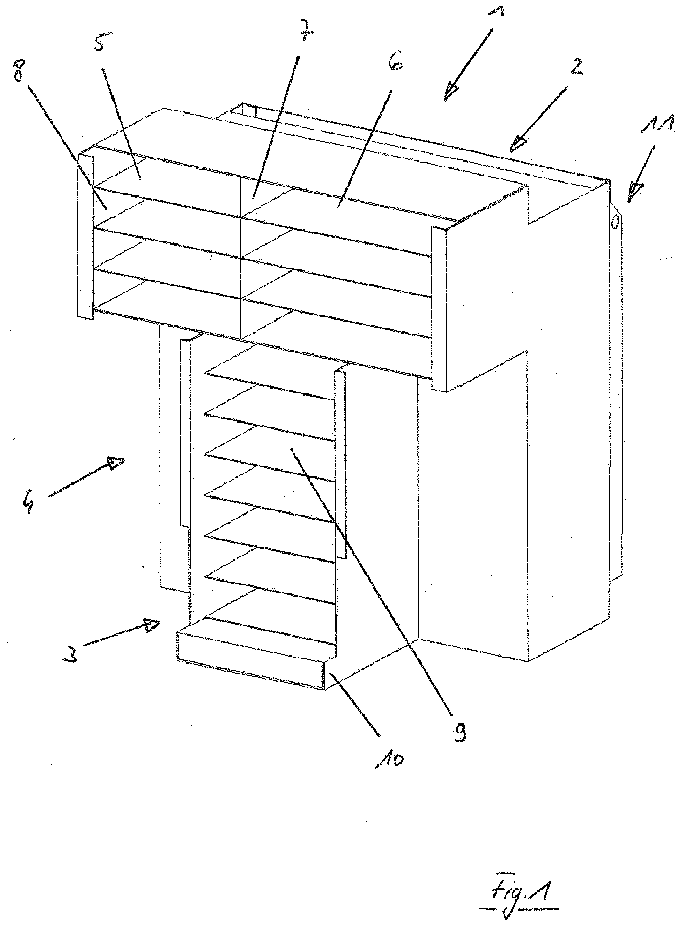

Figur 1 zeigt einen erfindungsgemäßen von der Rechteckform abweichenden Batterietrog 1 in Frontansicht. Die Batteriezellen sind nicht dargestellt. Der Batterietrog 1 weist vorderseitig zwei im Wesentlichen schrankförmig ausgebildete Segmente 2, 3 auf. Das erste Segment 2 ist hierbei derart über dem zweiten Segment 3 angeordnet, dass beide Segmente zusammen einen im Wesentlichen T-förmigen Frontkörper 4 bilden. Das erste Segment 2 verfügt über zwei Abschnitte 5, 6. Die Abschnitte sind in Höhenrichtung unmittelbar nebeneinander angeordnet und durch eine in Höhenrichtung senkrecht angeordnete Trennwand 7 voneinander getrennt. Die Abschnitte 5, 6 verfügen über Aufnahmen 8 zur Aufnahme von erfindungsgemäßen Batteriezellen im liegenden Zustand. Insgesamt verfügt jeder Abschnitt 5, 6 über vier Aufnahmen 8. Das zweite Segment 3 stellt ebenfalls Aufnahmen 9 zur Aufnahme von erfindungsgemäßen Batteriezellen im liegenden Zustand bereit. Die Aufnahmen sind dabei in Höhenrichtung übereinander angeordnet. Das zweite Segment 3 verfügt ferner über einen Sockel 10.

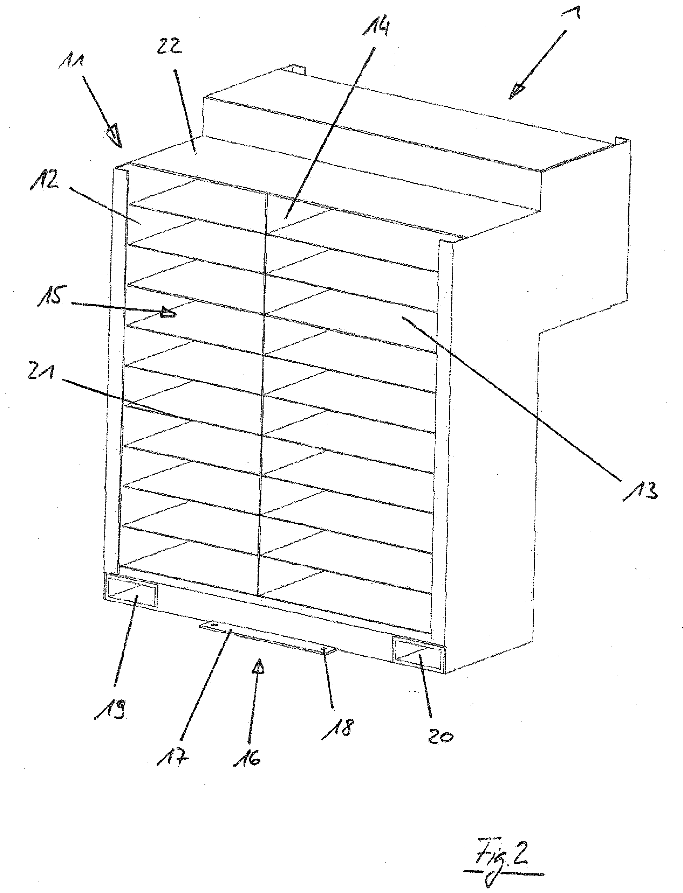

Der Batterietrog 1 verfügt ferner über ein rückwärtig der frontseitigen Segmente 2, 3 angeordnetes rückwärtiges Segment 11. Dieses ist in Figur 2 genauer dargestellt.

Figur 2 zeigt den erfindungsgemäßen Batterietrog 1 in rückwärtiger Ansicht. Erkennbar ist insbesondere das rückwärtig angeordnete Segment 11. Dieses ist im Wesentlichen schrankförmig ausgebildet. Es stellt zwei Abschnitte 12 und 13 bereit. Die Abschnitte 12, 13 sind in Höhenrichtung nebeneinander angeordnet und durch eine in Höhenrichtung senkrecht angeordnete Trennwand 14 voneinander getrennt. Die Abschnitte 12, 13 stellen Aufnahmen 15 zur Aufnahme von erfindungsgemäßen Batteriezellen im liegenden Zustand bereit. Die Aufnahmen 15 sind innerhalb jedes Abschnitts in Höhenrichtung übereinander angeordnet. Das dritte Segment weist ferner einen Sockel 16 auf. Der Sockel 16 ist unterhalb der Abschnitte 12, 13 angeordnet und stützt sich seinerseits auf einem nicht dargestellten Boden ab. Zur ortssicheren Befestigung weist der Sockel eine Befestigungsleiste 17 auf. Die Befestigungsleiste weist beidendseitig jeweils eine Bohrung 18 zur Aufnahme von Befestigungsmitteln auf. Der Sockel 16 weist Einfahrtaschen 19, 20 für Gabelstaplerzinken auf.

Die Aufnahmeböden 21 des rückwärtigen Segments 11 weisen Durchlässe auf, so dass sämtliche Aufnahmen 15 innerhalb eines Abschnitts 12, 13 über die Durchlässe strömungstechnisch miteinander verbunden sind.

Die in Höhenrichtung das rückwärtige Segment 11 abschließende Wandelement 22 weist ebenfalls Durchlässe auf, welche die obersten Aufnahmen 15 der Abschnitte 12, 13 mit der Umgebungsluft verbinden.

Die Durchlässe sind gemäß dem gezeigten Ausführungsbeispiel dadurch ausgebildet, dass die die Aufnahmeböden 21 und das Wandelement 22 begrenzenden Seitenwände mit ihren in Bezug auf die Zeichnungsebene nach Fig. 2 vorderen Randkanten vorspringen, so dass sich ein Spaltraum zwischen einer im endmontierten Zustand von den Seitenwänden getragenen Abdeckung einerseits und den Aufnahmeböden 21 beziehungsweise dem Wandelement 22 andererseits einstellt. Die Ausgestaltung dieses Spaltraums gestattet zwecks Kühlung der einzelnen Batteriezellen eine Luftzirkulation. Hierdurch bildet sich in vorteilhafter Weise ein Kamineffekt durch die einzelnen, übereinander angeordneten Aufnahmen 15, bis und durch das obere Wandelement 22 hindurch. Die in Höhenrichtung nach oben, durch das rückwärtige Segment 11 strömende Luft, kühlt die erfindungsgemäßen Batteriezellen in besonders effektiver Weise ab.

Der Kamineffekt kann weiter verstärkt werden, indem die frontseitigen Segmente 2, 3 sowie das rückwärtige Segment 11 mit einer Verkleidung 23 versehen werden.

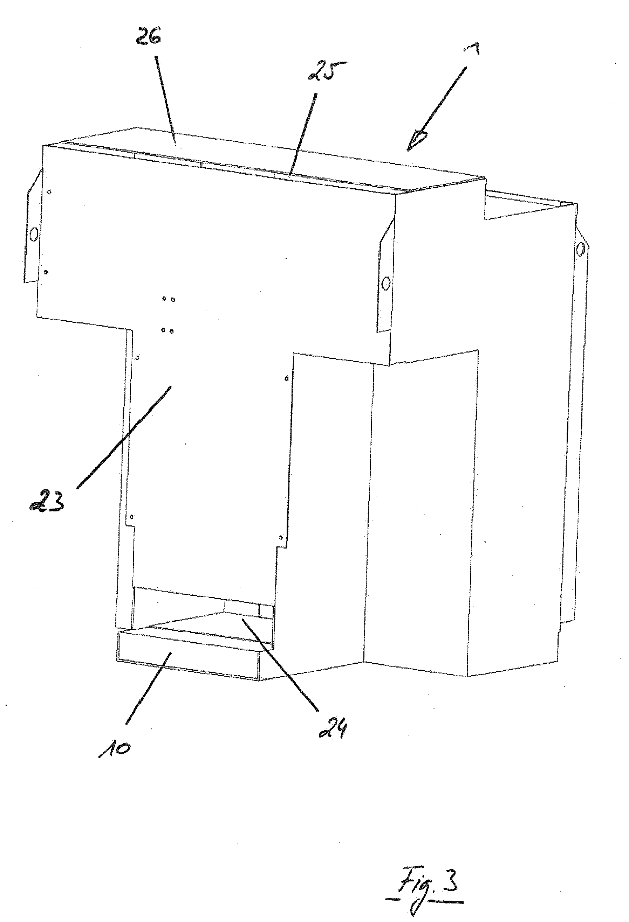

Figur 3 zeigt eine solche Verkleidung am Beispiel der frontseitigen Segmente 2, 3. Die Verkleidung 23 deckt dabei die Segmente 2, 3 bereichsweise ab. Verkleidung 23 und Sockel 10 des zweiten Segments 3 sind dabei in Höhenrichtung unter Belassung eines Einströmspalts 24 beabstandet voneinander angeordnet. Durch den Einströmspalt 24 strömt Luft in das zweite Segment 3 ein. Die Aufnahmen 9 des zweiten Segments 3 sind dabei strömungstechnisch miteinander verbunden. Ferner ist das erste Segment 2 mit dem zweiten Segment 3 strömungstechnisch verbunden. Zur Ausbildung eines effektiven Kamineffekts, ist die Verkleidung dabei quer zur Höhenrichtung unter Belassung eines Ausströmspalts 25 beabstandet vom oberen Wandelement 26 angeordnet.

Hierdurch wird eine besonders effektive Methode zur Belüftung von erfindungsgemäßen Batteriezellen bereitgestellt, die die Leistungsfähigkeit der erfindungsgemäßen Traktionsbatterie im Bereich der Hochstromanwendungen insgesamt verbessert.

Es ist für den Fachmann ersichtlich, dass vorgenanntes Ausführungsbeispiel nicht auf die räumliche Ausgestaltung beschränkt zu verstehen ist. Vielmehr kann der Batterietrog in Anpassung an den zur Verfügung stehenden Aufnahmeraum eines Fahrzeugs beliebig individuell ausgestaltet werden, so dass die Zahl der anordenbaren Batteriezellen im Batterietrog optimiert ist. Die einzelnen Segmente sind erfindungsgemäß als Module ausgebildet, die in beliebiger Weise räumlich miteinander verbindbar sind.

### Bezugszeichenliste

- 1: Batterietrog
- 2: erste Segment
- 3: zweite Segment
- 4: Frontkörper
- 5: Abschnitt
- 6: Abschnitt
- 7: Trennwand
- 8: Aufnahme
- 9: Aufnahme
- 10: Sockel
- 11: Segment
- 12: Abschnitt
- 13: Abschnitt
- 14: Trennwand
- 15: Aufnahme
- 16: Sockel
- 17: Befestigungsleiste
- 18: Befestigungsmittel
- 19: Lufteinlass
- 20: Lufteinlass
- 21: Aufnahmeboden
- 22: Wandelement
- 23: Abdeckung
- 24: Einströmspalt
- 25: Ausströmspalt
- 26: Wandelement

## Patentansprüche

1. Traktionsbatterie für Hochstromanwendungen, insbesondere in Flurförderzeugen oder Radladern, mit mehreren miteinander verschalteten Batteriezellen und einem Batterietrog zur Aufnahme der Batteriezellen, wobei die Batteriezellen einen Elektrolyten aufweisen, wobei der Elektrolyt in gelartiger und/oder gebundener Form bereitgestellt ist, und wobei der Batterietrog von der Rechteckform abweichend ausgebildet ist, **dadurch gekennzeichnet, dass** der Batterietrog modular aufgebaut ist, wobei die Module zur Ausbildung des Batterietrogs in Höhenrichtung übereinander und nebeneinander anordbar und miteinander verbindbar ausgebildet sind.

2. Traktionsbatterie nach Anspruch 1, **dadurch gekennzeichnet, dass** die Batteriezellen im Batterietrog in Höhenrichtung liegend angeordnet sind.

3. Traktionsbatterie nach einem der Ansprüche 1 bis 2, **dadurch gekennzeichnet, dass** der Batterietrog zweiseitig offen ausgebildet ist.

4. Traktionsbatterie nach einem der Ansprüche 1 bis 3, **dadurch gekennzeichnet, dass** benachbarte Batteriezellen beabstandet zueinander angeordnet sind.

5. Traktionsbatterie nach einem der Ansprüche 1 bis 4, **dadurch gekennzeichnet, dass** die Batteriezellen in Spalten und Reihen angeordnet sind, wobei benachbarte Reihen unter Belassung eines Spaltraumes beabstandet zueinander angeordnet sind.

6. Traktionsbatterie nach einem der Ansprüche 1 bis 5, **dadurch gekennzeichnet, dass** der Batterietrog mit einer Belüftungseinrichtung ausgerüstet ist.

7. System bestehend aus einem Fahrzeug und einer Traktionsbatterie gemäß einem der Ansprüche 1 bis 6, wobei das Fahrzeug einen von der Rechteckform abweichenden Aufnahmeraum zur Aufnahme der Traktionsbatterie bereitstellt, wobei der Batterietrog in seiner geometrischen Ausgestaltung in Abhängigkeit der geometrischen Ausgestaltung des Aufnahmeraums ausgebildet ist.

8. Verwendung einer Traktionsbatterie gemäß einem der Ansprüche 1 bis 7 als Hochstrombatterie.

9. Verwendung nach Anspruch 8, wobei die Traktionsbatterie als Energiequelle für einen Antrieb der Arbeitshydraulik eines Flurförderzeugs oder eines Radladers verwendet wird.

10. Verwendung nach einem der Ansprüche 8 oder 9, wobei die Traktionsbatterie als Energiequelle für den Fahrantrieb eines Flurförderzeugs oder eines Radladers.

## Claims

1. A traction battery for high current applications, in particular in industrial trucks or wheel loaders, comprising several battery cells connected to each other and a battery tray for receiving the battery cells, wherein the battery cells comprise an electrolyte, wherein the electrolyte is provided in a gel-like and/or bound form, and wherein the battery tray is formed in a non-rectangular shape, **characterized in that** the battery tray is constructed modularly, wherein the modules are designed such that they can be placed one above the other in the direction of height and next to each other and can be connected to each other for forming the battery tray.

2. A traction battery according to claim 1, **characterized in that** the battery cells are arranged in the battery tray such that they are lying in the direction of height.

3. A traction battery according to one of the claims 1 through 2, **characterized in that** the battery tray is open on two sides.

4. A traction battery according to one of the claims 1 through 3, **characterized in that** adjacent battery cells are spaced from each other.

5. A traction battery according to one of the claims 1 through 4, **characterized in that** the battery cells are arranged in columns and rows, wherein adjacent rows are spaced from each other while leaving a gap space.

6. A traction battery according to one of the claims 1 through 5, **characterized in that** the battery tray is provided with a ventilation device.

7. A system consisting of a vehicle and a traction battery according to one of the claims 1 through 6, wherein the vehicle provides a receiving space that deviates from the rectangular shape for receiving the traction battery, wherein the geometric design of the battery tray is realized in dependence on the geometric design of the receiving space.

8. A use of a traction battery according to one of the claims 1 through 7 as high current battery.

9. A use according to claim 8, wherein the traction battery is used as energy source for driving the work hydraulics of an industrial truck or a wheel loader.

10. A use according to one of the claims 8 or 9, wherein the traction battery is used as energy source for the drive of an industrial truck or a wheel loader.

## Revendications

1. Batterie de propulsion pour des applications de courant fort, notamment dans des chariots de manutention ou dans des chargeuses sur roues, comprenant plusieurs cellules de batterie connectées entre elles et un coffre de la batterie destiné à recevoir les cellules de batterie, les cellules de batterie comprenant un électrolyte, l'électrolyte étant présent sous forme analogue à un gel et/ou sous forme liée, et le coffre de la batterie étant conçu de sorte qu'il dévie de la forme rectangulaire, **caractérisée en ce que** le coffre de la batterie est modulaire, les modules étant conçus de sorte qu'ils peuvent être disposé l'un sur l'autre dans la direction de la hauteur et l'un à côté de l'autre et peuvent être reliés l'un à l'autre pour former le coffre de la batterie.

2. Batterie de propulsion selon la revendication 1, **caractérisée en ce que** les cellules de batterie sont disposées dans le coffre de la batterie dans la direction de la hauteur.

3. Batterie de propulsion selon l'une des revendications 1 à 2, **caractérisée en ce que** le coffre de la batterie est ouvert sur deux côtés.

4. Batterie de propulsion selon l'une des revendications 1 à 3, **caractérisée en ce que** des cellules de batterie adjacentes sont espacées l'une de l'autre.

5. Batterie de propulsion selon l'une des revendications 1 à 4, **caractérisée en ce que** les cellules de batterie sont disposées en colonnes et en rangées, des rangées adjacentes étant espacées l'une de l'autre en laissant un espace de fente.

6. Batterie de propulsion selon l'une des revendications 1 à 5, **caractérisée en ce que** le coffre de la batterie est muni d'un dispositif de ventilation.

7. Système composé d'un véhicule et d'une batterie de propulsion selon l'une des revendications 1 à 6, dans lequel le véhicule fournit un espace de réception, dont la géométrie est différente de la forme rectangulaire, pour recevoir la batterie de propulsion, la configuration géométrique du coffre de la batterie étant conçue en fonction de la configuration géométrique de l'espace de réception.

8. Utilisation d'une batterie de propulsion selon l'une des revendications 1 à 7 comme batterie à courant fort.

9. Utilisation selon la revendication 8, dans laquelle la batterie de propulsion est utilisée comme source d'énergie pour un entraînement de l'hydraulique de travail d'un chariot de manutention ou d'une chargeuse sur roues.

10. Utilisation selon l'une des revendications 8 ou 9, dans laquelle la batterie de propulsion est utilisée comme source d'énergie pour la traction d'un chariot de manutention ou d'une chargeuse sur roues.
